(19) Europäisches Patentamt
European Patent Office
Office européen des brevets

(11) Veröffentlichungsnummer : **0 069 910**
**B1**

# (12) EUROPÄISCHE PATENTSCHRIFT

(45) Veröffentlichungstag der Patentschrift : **07.11.84**

(51) Int. Cl.³ : **C 09 B 1/503**, C 07 C 97/26

(21) Anmeldenummer : **82105711.4**

(22) Anmeldetag : **28.06.82**

## (54) Verfahren zur Herstellung von 1-Hydroxy-4-amino-5(8)-nitro-anthrachinon.

(30) Priorität : **09.07.81 DE 3127127**

(43) Veröffentlichungstag der Anmeldung : **19.01.83 Patentblatt 83/03**

(45) Bekanntmachung des Hinweises auf die Patenterteilung : **07.11.84 Patentblatt 84/45**

(84) Benannte Vertragsstaaten : **CH DE GB LI**

(56) Entgegenhaltungen :
**FR-A- 2 230 692**
**FR-A- 2 289 573**
**GB-A- 1 181 748**
**CHEMICAL ABSTRACTS, Band 88, Nr. 6, 6. Februar 1978, Seite, 59, Nr. 38954u, Columbus, Ohio (USA); & JP - A - 77 95 744 (SUMITOMO CHEMICAL CO., LTD.) (11.08.1977) (Cat. D)**

(73) Patentinhaber : **BAYER AG**
**Konzernverwaltung RP Patentabteilung**
**D-5090 Leverkusen 1 Bayerwerk (DE)**

(72) Erfinder : **Hederich, Volker, Dr.**
**Hufelandstrasse 44**
**D-5000 Koeln 80 (DE)**
Erfinder : **Gehrke, Günter, Dr.**
**Leopold-Gmelin-Strasse 26**
**D-5000 Koeln 80 (DE)**

**EP 0 069 910 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung ist ein Verfahren zur Herstellung von 1-Hydroxy-4-amino-5-bzw. 8-nitro-anthrachinon aus 1,8-Dinitroanthrachinon bzw. 1,5-Dinitroanthrachinon oder deren Gemischen.

Aus der DE-PS 104 282 sowie aus der JA-OS 52/107027 ist bereits bekannt, daß α-Dinitroanthrachinone beim Behandeln mit rauchender Schwefelsäure in Hydroxy-nitroso-nitro-anthrachinone umgewandelt werden. Aus der DE-PS 96 197 sowie aus den japanischen Offenlegungsschriften 52/95744 sowie 52/107027 ist ferner bekannt, daß Dinitroanthrachinone in Schwefelsäure mit Reduktionsmitteln in Dihydroxy-diamino-anthrachinone übergeführt werden. Es ist weiterhin bekannt (vgl. DE-PS 79 768), daß Dinitroanthrachinone mit Schwefelsäure bei Gegenwart von Borsäure Hexahydroxy-anthrachinon liefern. Gemäß DE-PS 105 567 werden schließlich Dinitroanthrachinone mittels Oleum und Schwefel bei 100 bis 150 °C — gegebenenfalls in Gegenwart von Borsäure — in Hexahydroxy- bzw. Tetrahydroxydiaminoanthrachinon-disulfonsäuren überführt.

Es wurde nun gefunden, daß man die Titelverbindungen in einfacher Weise erhält, indem man α-Dinitroanthrachinone unterhalb 80 °C in $SO_3$-haltiger Schwefelsäure bei Gegenwart von Borsäure oder deren Anhydrid mit Reduktionsmitteln behandelt.

Dieser glatte Reaktionsverlauf muß im Hinblick auf die vorstehend abgehandelte Literatur als ausgesprochen überraschend angesehen werden.

Der Gehalt an freiem $SO_3$ in der erfindungsgemäß als Reaktionsmedium einzusetzenden rauchenden Schwefelsäure beträgt 5 bis 65 %, vorzugsweise 20 bis 40 %.

Als Reduktionsmittel kommen alle in der Anthrachinonchemie zur Reduktion von Nitrogruppen üblichen Stoffe, wie z. B. Eisen, Zink, Zinn, Aluminium, Phosphor, Schwefeldioxid und vorzugsweise Schwefel, in Betracht.

Der bevorzugte Temperaturbereich liegt zwischen 30 und 60 °C. Die Reaktionszeiten hängen vom eingesetzten Ausgangsmaterial, der Reaktionstemperatur, der Oleumkonzentration und der Art des Reduktionsmittels ab. Im allgemeinen ist die Reaktion nach spätestens 10 Stunden beendet, was dadurch zu erkennen ist, daß in dem Reaktionsgemisch kein α-Dinitroanthrachinon mehr nachweisbar ist. Bevorzugtes Ausgangsmaterial ist dabei 1,8-Dinitroanthrachinon.

Die zur Durchführung des erfindungsgemäßen Verfahrens erforderliche Menge an rauchender Schwefelsäure kann in weiten Bereichen schwanken ; sie beträgt vorzugsweise das 5- bis 10-fache der Gewichtsmenge an eingesetztem Dinitroanthrachinon. Die Borsäuremenge beträgt im allgemeinen das 1/4- bis 1/2-fache der Gewichtsmenge an eingesetztem Dinitroanthrachinon. Sie sollte jedoch mindestens in äquivalenten Mengen eingesetzt werden. Ein größerer Überschuß ist unschädlich. Auch die Reduktionsmittel müssen mindestens in der berechneten Menge, vorzugsweise aber im Überschuß, eingesetzt werden. Im Falle des vorzugsweise zu verwendenden Schwefels werden pro Mol Dinitroanthrachinon 1 bis 2 Mol Schwefel, ganz besonders bevorzugt 1,5 Mol Schwefel, benötigt.

Bei der praktischen Durchführung des erfindungsgemäßen Verfahrens geht man zweckmäßigerweise so vor, daß entweder die Dinitroanthrachinone in der 5- bis 10-fachen Gewichtsmenge 20 bis 40 %igen Oleums gelöst werden. Dann wird die etwa 0,5-fache Gewichtsmenge an Borsäure (bezogen auf Dinitroanthrachinon) zugegeben und bei einer Temperatur von 50 bis 60 °C 1,5 Mol bzw. die etwa 0,15-fache Gewichtsmenge Schwefel eingetragen. Danach wird die Reaktion gegebenenfalls durch weiteres Eintragen von geringen Mengen Schwefel zu Ende geführt. Alternativ zu dieser Verfahrensvariante können die Dinitroanthrachinone in eine vorbereitete Lösung von Borsäure in rauchender Schwefelsäure eingetragen werden und dann wie vorstehend beschrieben mit Schwefel behandelt werden. Die Reaktionsgemische werden dann durch Zusatz von verdünnter Schwefelsäure und Wasser auf 60 bis 80 %ige Schwefelsäure verdünnt. Aus diesem Reaktionsgemisch kristallisiert dann das Reaktionsprodukt in sehr reiner Form aus. Gemäß einer anderen Variante kann das unverdünnte Reaktionsgemisch auf Eiswasser gegeben werden, wobei sich das Reaktionsprodukt in einer weniger reinen Form abscheidet. Die Reinigung dieses Produkts kann dann in üblicher Weise erfolgen. Schließlich können die Titelverbindungen auch in einer weniger bevorzugten Verfahrensvariante dadurch hergestellt werden, daß man die Dinitroanthrachinone bei 50 bis 60 °C mit Oleum behandelt, bis kein Dinitroanthrachinon chromatographisch mehr nachweisbar ist. Danach wird mit Wasser oder verdünnter Schwelfelsäure unter Kühlung soweit verdünnt, daß sich eine etwa 60 bis 80 %ige Schwefelsäure gebildet hat. Man rührt dann bei Raumtemperatur oder bei erhöhter Temperatur (50 bis 60 °C) einige Stunden nach und läßt dabei das sich in einer Nebenreaktion bildende $SO_2$ als Reduktionsmittel einwirken. Das sich dabei abscheidende Reaktionsprodukt ist für manche Zwecke nicht rein genug und muß deshalb in üblicher Weise (beispielsweise durch Umkristallisation aus Dimethylformamid) gereinigt werden.

Als Ausgangsmaterialien für sämtliche Verfahrensvarianten kommen neben reinem 1,5- oder 1,8-Dinitroanthrachinon auch deren Gemische in Betracht, wie sie bei der technischen Dinitrierung von Anthrachinon anfallen.

Von den Titelverbindungen ist das 5-Nitro-Isomere bekannt (vgl. DE-OS 23 27 013). Beide Isomeren eignen sich zum Färben oder Bedrucken von synthetischen Fasern, insbesondere Polyesterfasern, nach üblichen Verfahren. Sie dienen darüber hinaus als Zwischenprodukte zur Herstellung von anderen wertvollen Farbstoffen, indem man die Nitrogruppe reduziert oder gegen einen Aminrest austauscht.

In den nachfolgenden Beispielen bedeuten Teile Gewichtsteile. Die Qualitätsangaben beruhen auf quantitativer Dünnschichtchromatographie.

Beispiel 1

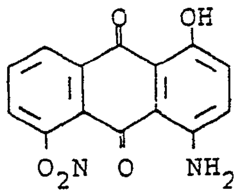

In 1 000 Teilen 30 %igem Oleum werden 50 Teile kristallisierte Borsäure gelöst. Man trägt sodann bei Raumtemperatur 100 Teile 1,8-Dinitroanthrachinon (Analyse : 97,6 % 1,8-DNA ; 0,8 % 1,5-DNA) unter Rühren ein. Auschließend werden bei einer Temperatur von 50 °C 15 Teile gepulverter Schwefel im Verlauf von 45 Minuten portionsweise zugesetzt. Das Reaktionsgemisch wird 1 Stunde bei 50 °C nachgerührt, auf Raumtemperatur abgekühlt und anschließend unter Kühlung mit 211 Teilen 78 %iger Schwefelsäure und darauf mit 525 Teilen Wasser verdünnt. Das ausgeschiedene Reaktionsprodukt wird abgesaugt, mit 133 Teilen 60 %iger Schwefelsäure und danach mit warmem Wasser neutralgewaschen. Man erhält 64,5 Teile 1-Hydroxy-4-amino-5-nitro-anthrachinon, das nach dem Umkristallisieren aus N-Methylpyrrolidon bei 270 °C schmilzt.

Beispiel 2

In eine aus 1 000 Teilen 20 %igem Oleum und 25 Teilen Borsäure hergestellte Reaktionsmischung wurden 100 Teile 1,8-Dinitroanthrachinon eingetragen. Bei Raumtemperatur gibt man sodann innerhalb von 25 Minuten 15 Teile Schwefel zu, erwärmt das Reaktionsgemisch auf 60 °C und hält unter Rühren 4 Stunden bei dieser Temperatur. Nach dem Abkühlen wird durch Zutropfen von 158 Teilen 78 %iger Schwefelsäure und 500 Teilen Wasser, jeweils unter Kühlung, das Reaktionsprodukt abgeschieden und, wie in Beispiel 1 angeführt, isoliert. Man erhält 61,6 Teile 1-Hydroxy-4-amino-5-nitroanthrachinon.

Beispiel 3

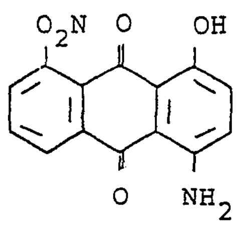

In 1 000 Teilen 35 %igem Oleum löst man 50 g kristallisierte Borsäure. Anschließend trägt man 100 Teile eines 99,5 %igen 1,5-Dinitroanthrachinons ein und dann bei 20 bis 25 °C im Verlauf einer 1/2 Stunde 15 g Schwefel. Das Reaktionsgemisch wird auf 50 °C erwärmt und 1,5 bis 2 Stunden bei dieser Temperatur gerührt. Unter Kühlung wird durch Zugabe von 262 Teilen 78 %iger Schwefelsäure und 574 Teilen Wasser das Reaktionsprodukt abgeschieden. Nach dem Absaugen, Waschen mit verdünnter Schwefelsäure und Wasser und anschließende Trocknung wurden 56,8 Teile einer Verbindung der angegebenen Formel erhalten, die nach dem Umkristallisieren aus Dimethylformamid bei 265-267 °C schmilzt.

Beispiel 4

100 Teile 1,5-Dinitroanthrachinon werden, wie im Beispiel 3 angegeben, mit 35 %igem Oleum in Gegenwart von Borsäure mit Schwefel reduziert. Der Ansatz wird anschließend auf 4 000 Teile Eis gegeben und abgesaugt. Nach Neutralwaschen erhält man 98 Teile des 1-Hydroxy-4-amino-8-nitroanthrachinons in Form eines 38 %igen Preßkuchens, das beispielsweise zu 1-Hydroxy-4,8-diaminoanthrachinon reduziert werden kann.

Beispiel 5

In 556 Teilen 20 %igem Oleum werden 50 Teile Borsäure gelöst. Anschließend gibt man 444 Teile 65 %iges Oleum hinzu und trägt in das so hergestellte Bor-Oleum mit einem $SO_3$-Gehalt von ca. 29 % 100

Teile 1,5-Dinitroanthrachinon ein. Innerhalb einer halben Stunde gibt man 17 Teile Schwefel zu und läßt dabei die Temperatur auf 50 °C steigen. Nach 1,5-stündigem Rühren bei dieser Temperatur wird durch Zugabe von 313 Teilen 78 %iger Schwefelsäure und 570 Teilen Wasser das Reaktionsprodukt abgeschieden. Nach der üblichen Aufarbeitung erhält man 51,4 Teile der in Beispiel 3 angegebenen Verbindung.

Beispiel 6

50 Teile 1,5-Dinitroanthrachinon werden in 500 Teilen 30 %igem Oleum 3 Stunden lang auf 50 °C erwärmt. Unter Kühlung trägt man darauf 25 Teile Borsäure innerhalb von 20 Minuten ein, kühlt sodann auf 15 bis 20 °C und versetzt das Reaktionsgemisch mit 7 Teilen Schwefel. Nach 6-stündigem Nachrühren bei 15 bis 20 °C wird wie angegeben aufgearbeitet. Man erhält 25,8 Teile 1-Hydroxy-4-amino-8-nitroanthrachinon.

Beispiel 7

30 Teile 1,5-Dinitroanthrachinon werden in 300 Teilen 28 %igem Oleum 4 Stunden bei 50 bis 60 °C gerührt. Unter Kühlung werden anschließend 15 Teile Borsäure zugegeben und gelöst. Dann wird mit 57,5 Teilen 78 %iger Schwefelsäure und 156 Teilen Wasser unter weiterer Kühlung verdünnt und 15 Stunden bei Raumtemperatur gerührt. Man gibt das Reaktionsgemisch auf 2 000 Teile Eis, saugt ab und wäscht mit warmem Wasser neutral. Nach dem Ausrühren mit 500 Teilen 10 %igem Pyridinwasser bei 90 bis 100 °C, Absaugen und Waschen werden 16 Teile 1-Hydroxy-4-amino-8-nitroanthrachinon erhalten.

Beispiel 8

Eine Mischung aus 300 Teilen 28 %igem Oleum und 30 Teilen 1,5-Dinitroanthrachinon wird 3 Stunden bei 50 bis 60 °C gerührt. Nach Zugabe von 85,5 Teilen 78 %iger Schwefelsäure und 165 Teilen Wasser unter Kühlung wird die Reaktionsmischung 6 Stunden bei Raumtemperatur gerührt und anschließend über Nacht stehen gelassen. Man gibt auf 1 000 Teile Wasser, saugt ab und wäscht mit Wasser neutral. Nach dem Trocknen erhält man 23,3 Teile rohes 1-Hydroxy-4-amino-8-nitroanthrachinon, das durch Umkristallisation aus Dimethyl-formamid gereinigt werden kann.

Führt man analog die Umsetzung in 25 %igem Oleum durch, verdünnt nach 4-stündigem Rühren bei 60 °C mittels 78 %iger Schwefelsäure und Wasser auf 70 %ige Schwefelsäure rührt 4 Stunden bei Raumtemperatur nach, läßt anschließend über Nacht stehen und erwärmt schließlich 6 Stunden auf 100 °C, so erhält man nach der oben beschriebenen Aufarbeitung 24,6 Teile rohes 1-Hydroxy-4-amino-8-nitroanthrachinon.

Beispiel 9

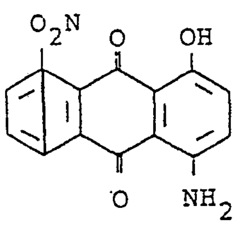

100 Teile eines Dinitroanthrachinongemisches mit 51 % 1,5-DNA und 42 % 1,8-DNA-Anteil werden in einer Lösung von 50 Teilen Borsäure in 1 000 Teilen 30 %igem Oleum mit 18 Teilen Schwefel bei 50 °C behandelt. Nach 2-stündigem Rühren wird das Reaktionsgemisch durch Zugabe von 78 %iger Schwefelsäure und Wasser auf eine 60 %ige Schwefelsäure heruntergestellt, abgesaugt und wie üblich aufgearbeitet. Man erhält nach dem Trocknen 49,3 Teile eines Produktgemisches, das im wesentlichen aus 1-Hydroxy-4-amino-5- bzw. -8-nitroanthrachinon besteht.

Gibt man den gesamten Reaktionsansatz auf Eis, so werden 96 Teile eines Rohproduktes erhalten, das beispielsweise durch Reduktion auf ein Gemisch von 1-Hydroxy-4,5- bzw.-4,8-diaminanthrachinon weiterverarbeitet werden kann.

**Ansprüche**

1. Verfahren zur Herstellung von 1-Hydroxy-4-amino-5- bzw. -8-nitroanthrachinon, dadurch gekennzeichnet, daß man unterhalb 80 °C 1,8-Dinitroanthrachinon bzw. 1,5-Dinitroanthrachinon oder deren Gemische in $SO_3$-haltiger Schwefelsäure in Gegenwart von Borsäure mit Reduktionsmitteln behandelt.

2. Verfahren gemäß Anspruch 1, dadurch gekennzeichnet, daß man als Reduktionsmittel Schwefel verwendet.

3. Verfahren gemäß Anspruch 2, dadurch gekennzeichnet, daß man die Umsetzung bei 30 bis 60 °C durchführt.

4. Verfahren gemäß Anspruch 1-3, dadurch gekennzeichnet, daß man 1,8-Dinitroanthrachinon einsetzt.

5. Verfahren gemäß Anspruch 1, dadurch gekennzeichnet, daß man Dinitroanthrachinongemische einsetzt, wie sie bei der Dinitrierung von Anthrachinon anfallen.

## Claims

1. Process for the preparation of 1-hydroxy-4-amino-5- or -8-nitroanthraquinone, characterised in that 1,8-dinitroanthraquinone or 1,5-dinitroanthraquinone respectively or mixtures thereof are treated below 80 °C in $SO_3$-containing sulphuric acid in the presence of boric acid with reducing agents.

2. Process according to Claim 1, characterised in that sulphur is used as the reducing agent.

3. Process according to Claim 2, characterised in that the reaction is carried out at 30 to 60 °C.

4. Process according to Claim 1-3, characterised in that 1,8-dinitroanthraquinone is employed.

5. Process according to Claim 1, characterised in that dinitroanthraquinone mixtures as obtained in the dinitration of anthraquinone are employed.

## Revendications

1. Procédé pour la préparation de 1-hydroxy-4-amino-5-, respectivement 8-anthraquinone, caractérisé en ce qu'on traite de la 1,8-dinitroanthraquinone, respectivement 1,5-dinitroanthraquinone ou leurs mélanges dans de l'acide sulfurique contenant du $SO_3$ avec des réducteurs au-dessous de 80 °C en présence d'acide borique.

2. Procédé selon la revendication 1, caractérisé en ce qu'on utilise du soufre comme réducteur.

3. Procédé selon la revendication 2, caractérisé en ce qu'on effectue la réaction entre 30 et 60 °C.

4. Procédé selon les revendications 1 à 3, caractérisé en ce que l'on met en œuvre de la 1,8-dinitroanthraquinone.

5. Procédé selon la revendication 1, caractérisé en ce que l'on met en œuvre des mélanges de dinitroanthraquinones tels qu'ils se forment lors de la dinitration de l'anthraquinone.